(19) Europäisches Patentamt
European Patent Office
Office européen des brevets

(11) **EP 4 670 890 A1**

(12) **EUROPEAN PATENT APPLICATION**

(43) Date of publication:
**31.12.2025 Bulletin 2026/01**

(21) Application number: **25183445.3**

(22) Date of filing: **17.06.2025**

(51) International Patent Classification (IPC):
**B23K 9/073** $^{(2006.01)}$ **B23K 9/09** $^{(2006.01)}$
**B23K 9/12** $^{(2006.01)}$ **B23K 9/173** $^{(2006.01)}$
**B23K 9/095** $^{(2006.01)}$

(52) Cooperative Patent Classification (CPC):
**B23K 9/173; B23K 9/0735; B23K 9/09;
B23K 9/095; B23K 9/124**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.06.2024 JP 2024103461**

(71) Applicant: **DAIHEN Corporation
Yodogawa-ku
Osaka-shi
Osaka 532-8512 (JP)**

(72) Inventor: **TAKADA, Kento
Osaka-shi, 532-8512 (JP)**

(74) Representative: **Boult Wade Tennant LLP
Salisbury Square House
8 Salisbury Square
London EC4Y 8AP (GB)**

(54) **PULSE ARC WELDING CONTROL METHOD**

(57) A method for controlling pulse arc welding involving feeding a welding wire (1) and applying a welding current (Iw) by repeating a pulse cycle including: a peak rising period (Tu) of applying a peak rising current (Iu) increasing from a base current (Ib) to a peak current (Ip); a peak period (Tp) of applying the peak current (Ip); a peak falling period (Tk) of applying a peak falling current (Ik) decreasing from the peak current (Ip) to the base current (Ib); and a base period (Tb) of applying the base current (Ib). The feed speed (Fw) of the welding wire (1) is changed such that it beings to change from a reverse-feeding peak value (Wr) toward a forward-feeding peak value (Ws) at a point earlier by a first preceding period (Ta1r) than the start of the peak rising period (Tu). Then, the feed speed (Fw) reaches the forward-feeding peak value (Ws) at a point earlier than an end of the peak rising period (Tu), and beings to change from the forward-feeding peak value (Ws) toward the reverse-feeding peak value (Wr) at a point earlier by a second preceding period (Ta2r) than the start of the peak falling period (Tk), and reaches the reverse-feeding peak value (Wr) at a point earlier than an end of the peak falling period (Tk).

FIG.1

**Description**

<u>FIELD</u>

The present disclosure relates to a method for controlling pulse arc welding that involves feeding a welding wire.

<u>BACKGROUND</u>

Pulse arc welding that involves feeding a welding wire is used to weld materials such as steel. This pulse arc welding involves feeding a welding wire and applying a welding current by repeating a pulse period consisting of: a peak rising period of applying a peak rising current that increases from a base current to a peak current; a peak period of applying the peak current; a peak falling period of applying a peak falling current that decreases from the peak current to the base current; and a base period of applying the base current. In pulse arc welding, achieving the one-droplet-per-pulse transfer mode is desirable for reducing spatter and ensuring excellent bead appearance.

According to JP-B-6123069, during a predetermined period between a point in the peak period to a point in the base period, the feed speed of the welding wire is controlled such that the feed speed is reduced compared with the feed speed during the rise of the peak current, or that the feed direction is reversed to retract the welding wire from the welding target.

To ensure good welding quality in pulse arc welding, maintaining the one-droplet-per-pulse transfer mode throughout the operation is crucial. However, conventional pulse arc welding techniques may fail to maintain the one-droplet-per-pulse transfer mode as the welding conditions vary, leading to deterioration of welding quality.

In view of the above, the present disclosure aims to provide a method for controlling pulse arc welding that ensures high welding quality by consistently maintaining the one-droplet-per-pulse transfer mode, regardless of, for example, variations in welding conditions.

<u>SUMMARY</u>

According to a first aspect of the present disclosure, there is provided a method for controlling pulse arc welding that involves feeding a welding wire and applying a welding current by repeating a pulse cycle including: a peak rising period of applying a peak rising current that increases from a base current to a peak current; a peak period of applying the peak current; a peak falling period of applying a peak falling current that decreases from the peak current to the base current; and a base period of applying the base current. The method may comprise changing a feed speed of the welding wire in a manner such that: the feed speed beings to change from a reverse-feeding peak value toward a forward-feeding peak value at a point earlier by a first preceding period than a start of the peak rising period; the feed speed reaches the forward-feeding peak value at a point earlier than an end of the peak rising period; the feed speed beings to change from the forward-feeding peak value toward the reverse-feeding peak value at a point earlier by a second preceding period than a start of the peak falling period; and the feed speed reaches the reverse-feeding peak value at a point earlier than an end of the peak falling period.

In an embodiment, the first preceding period and the second preceding period may be set to fall within a range from 0.2 ms to 1.0 ms, inclusive (that is, equal to or more than 0.2 ms and equal to or less than 1.0 ms).

In an embodiment, the pulse frequency, which is the reciprocal of the pulse cycle, may be set to fall within a range of $\pm 15\%$ of an average value of the welding current.

In an embodiment, the method of the present disclosure may further comprise controlling an arc length by modulating at least the peak current.

With the configurations described above, the method for controlling pulse arc welding, for example, ensures high welding quality by consistently maintaining the one-droplet-per-pulse transfer mode, regardless of variations in welding conditions.

<u>DRAWINGS</u>

Fig. 1 is a block diagram of a welding device that implements a pulse arc welding control method according to an embodiment of the present disclosure.
Fig. 2 is a timing chart of signals used in the pulse arc welding device shown in Fig 1 to implement the pulse arc welding control method according to the embodiment of the present disclosure.

<u>EMBODIMENTS</u>

The following describes embodiments of the present disclosure, with reference to the drawings.

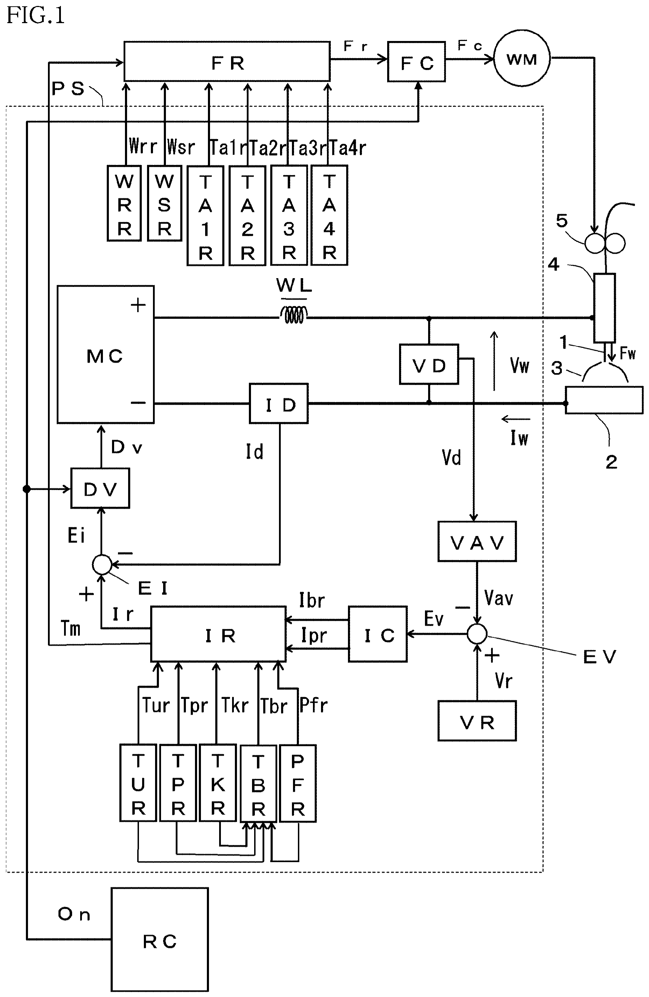

Fig. 1 is a block diagram of a welding device that implements a pulse arc welding control method according to an embodiment of the present disclosure. The welding device is mainly composed of a welding power supply PS, which is enclosed in a dotted box, a robot control device RC, a robot (not shown), and other components. The following describes each block shown in the figure.

The welding power supply PS is composed of the following blocks.

A power control circuit MC receives mains power, such as three-phase 200 VAC, as input. The power control circuit MC then performs output control, such as inverter control, based on a drive signal Dv (described later) to outputs a welding voltage Vw and a welding current Iw that are suitable for welding. Although not shown in the figure, the power control circuit MC includes the following circuits: a primary rectifier that converts the AC mains power to DC; a capacitor that smooths the DC output; an inverter that operates according to the drive signal Dv to convert the smoothed DC to high-frequency AC; an inverter transformer that steps down the voltage of the high-frequency AC to a level suitable for welding; and a secondary rectifier that rectifies the resulting high-frequency AC.

A reactor WL is interposed between the positive output of the power control circuit MC and a welding torch 4 to smooth the output of the power control circuit MC.

A feed motor WM is driven to rotate according to a feed control signal Fc, which will be described later. The feed motor WM is coupled to feed rolls 5. As the feed rolls 5 rotate, the welding wire 1 is fed in a forward direction and a reverse direction at a feed speed Fw through the welding torch 4, so that an arc 3 is established between the welding wire 1 and the base material 2. The feed motor WM and the welding torch 4 are integrated into the robot. When the welding voltage Vw is applied between the contact tip (not shown in the figure) of the welding torch 4 and the base material 2, the welding current Iw flows.

A welding-voltage detection circuit VD detects the welding voltage Vw to output a welding-voltage detection signal Vd. A welding-voltage averaging circuit VAV averages the welding-voltage detection signal Vd (by passing it through a low-pass filter) to output an average-welding-voltage signal Vav. A welding-voltage setting circuit VR outputs a predetermined welding-voltage setting signal Vr. A voltage-error amplifying circuit EV amplifies the difference between the welding-voltage setting signal Vr (+) and the average-welding-voltage signal Vav (-) to output an amplified-voltage-error signal Ev.

A current modulating circuit IC receives the amplified-voltage-error signal Ev as input and applies PI (proportional-integral) control and PID (proportional-integral-derivative) control to output a peak-current setting signal Ipr and a base-current setting signal Ibr. By this circuit, the currents of the peak-current setting signal Ipr and the base-current setting signal Ibr are modulated to adjust the average-welding-voltage signal Vav to match (equal) the welding-voltage setting signal Vr. As a result, arc length control is performed to maintain an optimal arc length. In an alternative example, it is possible to modulate the current of the peak-current setting signal Ipr alone and keep the base-current setting signal Ibr at a predetermined constant value.

A peak-rising-period setting circuit TUR outputs a predetermined peak-rising-period setting signal Tur. A peak-period setting circuit TPR outputs a predetermined peak-period setting signal Tpr. A peak-falling-period setting circuit TKR outputs a predetermined peak-falling-period setting signal Tkr.

A pulse-frequency setting circuit PFR outputs a pulse-frequency setting signal Pfr that is determined in advance to satisfy the conditions (1) and (2) below.

(1) The value of the pulse-frequency setting signal Pfr falls within the range from 100 Hz to 350 Hz, inclusive, and more preferably within the range from 150 Hz to 300 Hz, inclusive.

(2) The value of the pulse-frequency setting signal Pfr falls within the range of ±15% of the average value of the welding current Iw, and more preferably within the range of ±10% of the average value of the welding current Iw.

A base-period setting circuit TBR receives, as input, the peak-rising-period setting signal Tur, the peak-period setting signal Tpr, the peak-falling-period setting signal Tkr, and the pulse-frequency setting signal Pfr, and outputs a base-period setting signal Tbr given by the following equation:

$$Tbr = (1/Pfr) - Tur - Tpr - Tkr.$$

A welding-current setting circuit IR receives, as input, the peak-rising-period setting signal Tur, the peak-period setting signal Tpr, the peak-falling-period setting signal Tkr, the base-period setting signal Tbr, the peak-current setting signal Ipr, and the base-current setting signal Ibr to output a welding-current setting signal Ir and a timer signal Tm through the following processes.

(1) During the peak rising period Tu, which is determined by the peak-rising-period setting signal Tur, the welding-current setting circuit IR outputs a timer signal Tm = 1 and also outputs, as the welding-current setting signal Ir, a peak rising current Iu that increases from the value of the base-current setting signal Ibr to the value of the peak-current setting signal Ipr.

(2) During the subsequent peak period Tp, which is determined by the peak-period setting signal Tpr, the welding-current setting circuit IR outputs the timer signal Tm = 2, and also outputs the peak-current setting signal Ipr as the welding-current setting signal Ir.

(3) During the subsequent peak falling period Tk, which is determined by the peak-falling-period setting signal Tkr, the welding-current setting circuit IR outputs the timer signal Tm = 3, and also outputs, as the welding-current setting signal Ir, the peak falling current Ik that decreases from the value of the peak-current setting signal Ipr to the value of the base-current setting signal Ibr.

(4) During the subsequent base period Tb, which is determined by the base-period setting signal Tbr, the welding-current setting circuit IR outputs the timer signal Tm = 4, and also outputs the base-current setting signal Ibr as the welding-current setting signal Ir.
(5) The processes (1) to (4) are repeated.

A forward-feeding-peak-value setting circuit WSR outputs a forward-feeding-peak-value setting signal Wsr having a predetermined positive value. A reverse-feeding-peak-value setting circuit WRR outputs a reverse-feeding-peak-value setting signal Wrr having a predetermined negative value.

A welding-current detection circuit ID detects the welding current Iw to output a welding-current detection signal Id. A current-error amplifying circuit EI amplifies the difference between the welding-current setting signal Ir (+) and the welding-current detection signal Id (-) to output an amplified-current-error signal Ei. A drive circuit DV receives, as input, the amplified-current-error signal Ei, and an activation signal On, which is sent from the robot control device RC described later. When the activation signal On is at High level (welding start), the drive circuit DV performs pulse-width modulation control or other control based on the amplified-current-error signal Ei to output a drive signal Dv for driving the inverter of the power control circuit MC. When the activation signal On is at Low level (welding stop), the drive circuit DV stops the output of the drive signal Dv.

A first-preceding-period setting circuit TA1R outputs a predetermined first-preceding-period setting signal Ta1r. A second-preceding-period setting circuit TA2R outputs a predetermined second-preceding-period setting signal Ta2r. A third-preceding-period setting circuit TA3R outputs a predetermined third-preceding-period setting signal Ta3r. A fourth-preceding-period setting circuit TA4R outputs a predetermined fourth-preceding-period setting signal Ta4r.

A feed-speed setting circuit FR receives, as input, the forward-feeding-peak-value setting signal Wsr, the reverse-feeding-peak-value setting signal Wrr, the timer signal Tm, and the first-to fourth-preceding-period setting signals Ta1r, Ta2r, Ta3r, and Ta4r, and outputs a feed-speed setting signal Fr based on the following descriptions (1) and (2).

(1) The feed-speed setting signal Fr changes from the value of the forward-feeding-peak-value setting signal Wsr to the value of the reverse-feeding-peak-value setting signal Wrr. Specifically, the change of the feed-speed setting signal Fr begins upon the passage of the period given by (Tpr - Ta2r) from the point at which the timer signal Tm changes to 2 (the peak period). Then, the feed-speed setting signal Fr reaches the value of the reverse-feeding-peak-value setting signal Wrr upon the passage of the period given by (Tkr - Ta4r) from the point at which the timer signal Tm changes to 3 (the peak falling period).
(2) The feed-speed setting signal Fr changes from the value of the reverse-feeding-peak-value setting signal Wrr to the value of the forward-feeding-peak-value setting signal Wsr. Specifically, the change of the feed-speed setting signal Fr begins upon the passage of the period given by (Tbr - Ta1r) from the point at which the timer signal Tm changes to 4 (the base period).

Then, the feed-speed setting signal Fr reaches the value of the forward-feeding-peak-value setting signal Wsr upon the passage of the period given by (Tur - Ta3r) from the point at which the timer signal Tm changes to 1 (the peak rising period).

A feed control circuit FC receives, as input, the feed-speed setting signal Fr, and the activation signal On, which is sent from the robot control device RC described later. When the activation signal On is High (the welding start), the feed control circuit FC outputs the feed control signal Fc that instructs the feed motor WM to feed the welding wire 1 at the speed set by the feed-speed setting signal Fr. When the activation signal On is Low, the feed control circuit FC outputs the feed control signal Fc that instructs the feed motor WM to stop feeding the wire feed.

The robot control device RC operates the robot (not illustrated) to move according to a pre-inserted work program and outputs the activation signal On that instructs the welding start or welding stop.

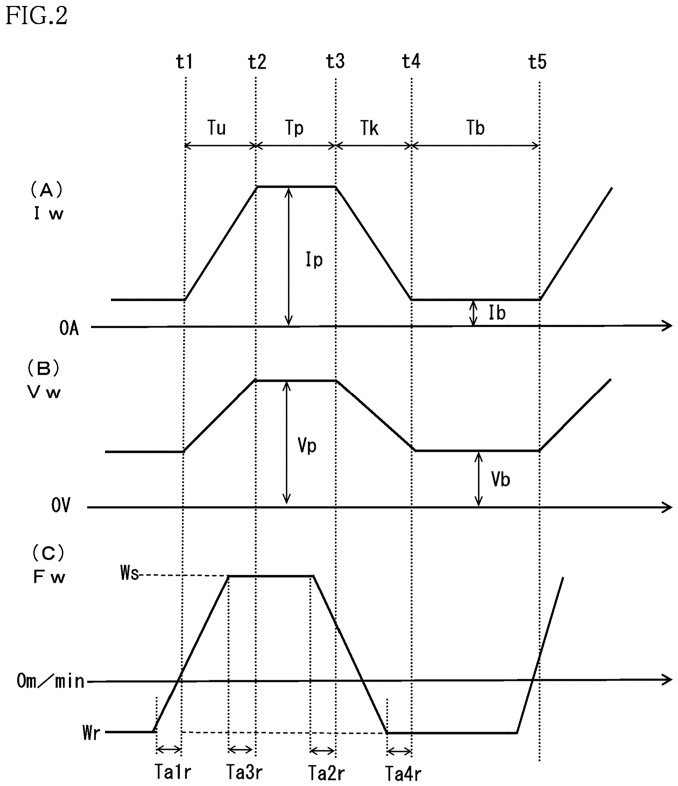

Fig. 2 is a timing chart of signals used in the pulse arc welding device shown in Fig 1 to implement the pulse arc welding control method according to the embodiment of the present disclosure. In the figure, (A) shows the welding current Iw, (B) shows the welding voltage Vw, and (C) shows the feed speed Fw of the welding wire, each changing over time. With reference to the figure, the following describes the operation of each signal.

When the feed speed Fw has a positive value (shown above 0 in (C) of the figure), the welding wire is fed in the forward direction, toward the base material. When the feed speed Fw has a negative value (shown below 0 in (C) of the figure), the welding wire is fed in the reverse direction, away from the base material.

During the predetermined peak rising period Tu from Time t1 to t2, the peak rising current Iu that increases from the base current Ib to the peak current Ip under current modulation control is applied as shown in (A), and the peak rising voltage that rises from the base voltage Vb to the peak voltage Vp is applied between the welding wire and the base material as shown in (B).

As shown in (C), the feed speed Fw is changed from the reverse-feeding peak value Wr to the forward-feeding peak value Ws. The feed speed Fw starts to change earlier than the start of the peak rising period Tu (time t1) by the period determined by the first-preceding-period setting signal Ta1r and then reaches the forward-feeding peak value Ws earlier than the end of the peak rising period Tu (time t2) by the period determined by the third-preceding-period setting signal Ta3r. Thereafter, the feed speed Fw is held at the forward-feeding peak value Ws. The first-preceding-period setting signal Ta1r and the third-preceding-period setting signal Ta3r are each set to the value falling within the range from 0.2 ms (millisecond(s)) to 1.0 ms, inclusive,. and more preferably to the value falling within the range from 0.5 ms to 0.8 ms, inclusive. The peak rising period Tu is set by the peak-rising-period setting signal Tur shown in Fig. 1. The base current Ib is set by the base-current setting signal Ibr showing in Fig. 1. The peak current Ip is set by the peak-current setting signal Ipr shown in Fig. 1. The reverse-feeding peak value Wr is set by the reverse-feeding-peak-value setting signal Wrr shown in Fig. 1. The forward-feeding peak value Ws is set by the forward-feeding-peak-value setting signal Wsr shown in Fig. 1.

During the predetermined peak period Tp from time t2 to t3, the peak current Ip under current modulation control is applied as shown in (A), and the peak voltage Vp is applied between the welding wire and the base material as shown in (B). The peak period Tp is set by the peak-period setting signal Tpr shown in Fig. 1.

During the predetermined peak falling period Tk from time t3 to t4, the peak falling current Ik that decreases from the peak current Ip to the base current Ib under current modulation control is applied as shown in (A), and the peak falling voltage that decreases from the peak voltage Vp to the base voltage Vb is applied between the welding wire and the base material as shown in (B). As shown in (C), the feed speed Fw is changed from the forward-feeding peak value Ws to the reverse-feeding peak value Wr. The feed speed Fw starts to change earlier than the start of the peak falling period Tk (time t3) by the period determined by the second-preceding-period setting signal Ta2r and then reaches the reverse-feeding peak value Wr earlier than the end of the peak falling period Tk (time t4) by the period determined by the fourth-preceding-period setting signal Ta4r. Thereafter, the feed speed Fw is held at the reverse-feeding peak value Wr. The second-preceding-period setting signal Ta2r and the fourth-preceding-period setting signal Ta4r are each set to the value falling within the range from 0.2 ms to 1.0 ms, inclusive, and more preferably to the value falling within the range from 0.5 ms to 0.8 ms, inclusive. The peak falling period Tk is set by the peak-falling-period setting signal Tkr shown in Fig. 1.

During the predetermined base period Tb from time t4 to t5, the base current Ib under current modulation control is applied as shown in (A), and the base voltage Vb is applied between the welding wire and the base material as shown in (B). The base period Tb is set by the base-period setting signal Tbr shown in Fig. 1.

The pulse frequency Pf, which is the reciprocal of the pulse period spanning from time t1 to t5, is set by the pulse-frequency setting signal Pfr shown in Fig. 1 to the value satisfying:

(1) within the range from 100 Hz to 350 Hz, inclusive; or
(2) within the range of ±15% of the average value of the welding current Iw.

The following lists the example values of the respective parameters: Tu = 1 ms; Tp = 1.5 ms; Tk = 1 ms; Pf = 100 to 350 Hz; Ip = 350 to 450 A; Ib = 50 to 150 A; Ws = 50 m/min; and Wr = -20 m/min.

The following describes effects of the present embodiment. The present embodiment provides a method for controlling pulse arc welding that involves feeding a welding wire and applying a welding current by repeating a pulse cycle including: a peak rising period of applying a peak rising current that increases from a base current to a peak current; a peak period of applying the peak current; a peak falling period of applying a peak falling current that decreases from the peak current to the base current; and a base period of applying the base current. The method of the present disclosure comprises changing the feed speed of the welding wire in a manner such that: the feed speed beings to change from a reverse-feeding peak value toward a forward-feeding peak value at a point earlier by a first preceding period than a start of the peak rising period; the feed speed reaches the forward-feeding peak value at a point earlier than an end of the peak rising period; the feed speed beings to change from the forward-feeding peak value toward the reverse-feeding peak value at a point earlier by a second preceding period than a start of the peak falling period; and the feed speed reaches the reverse-feeding peak value at a point earlier than an end of the peak falling period. In this method, the peak current applied during the peak period causes a droplet to form at the tip of the welding wire. During the subsequent base period, the welding wire is fed in the reverse direction, exerting a continuous upward force on the droplet. This reliably causes the droplet to transfer to the weld pool. In addition, the change of the feed speed from the reverse-feeding peak value to the forward-feeding peak value starts at the time that is the first preceding period earlier than the start of the peak rising period, and the feed speed reaches the forward-feeding peak value before the end of the peak rising period. This ensures that the feed speed stabilizes at the forward-feeding peak value by the start of the peak period, allowing a droplet of an optimal size to form. In addition, the change of the feed speed from the forward-feeding peak value to the reverse-feeding peak value starts at the time that is the second preceding period earlier than the start of the peak falling period, and the feed speed reaches the reverse-feeding peak value before the end of the peak falling period. This ensures that the feed speed changes to the reverse-feeding peak value by the start of the base period, so that a strong upward force is exerted on the droplet to detach the droplet. As a result, the one-droplet-per-pulse transfer mode is achieved. In this way, the one-droplet-per-pulse transfer mode is consistently maintained throughout welding, regardless of variations in welding conditions. This ensures high-quality welding.

More preferably, according to the present embodiment, the first preceding period and the second preceding period are each set to fall within a range from 0.2 ms to 1.0 ms, inclusive. If the period is shorter than 0.2 ms, the feed speed stabilization may lag behind that of the welding current, potentially affecting the formation and detachment of a droplet. If the period is longer than 1.0 ms, there is a long time lag between the feed speed transition and the welding current transition, potentially affecting the formation and detachment of a droplet.

More preferably, according to the present embodiment, the pulse frequency, which is the reciprocal of the pulse period, is set to fall within the range of ±15% of the average value of the welding current. In other words, when the average value of the welding current is 100 A, the pulse frequency is set to fall within the range of ±15% of 100 Hz. When the average value of the welding current is 150 A, it is set within the range of ±15% of 150 Hz. When the average value of the welding current is 200 A, it is set within the range of ±15% of 150 Hz. The average value of the welding current determines the feed speed. In current modulation control, it is possible to set the pulse frequency independently of the average value of the welding current. For example, when the average value of the welding current is 200 A, the pulse frequency can be set to any of 100 Hz, 200 Hz, or 300 Hz. However, the average value of the welding current determines the amount of the welding wire to be fed. Consequently, the pulse frequency affects the size of the droplet that is transferred during each pulse period. When the pulse frequency is set to 100 Hz, the droplet size tends to be too large. When the pulse frequency is set to 300 Hz, the droplet size tends to be too small. The pulse frequency of 200 Hz ensures an optimal drop size. This is based on the preconditions that the pulse period is consistent under current modulation control and that the one-droplet-per-pulse transfer mode is reliably maintained due to the forward and revise feeding of the welding wire. It has been confirmed by experiment that setting the pulse frequency to ±15% of the average value of the welding current constantly ensures that the droplet forms at an optimal size. That is, this setting ensures that the size of each droplet transferred in one pulse period is optimized according to the average value of the welding current and thus leading to good welding quality.

More preferably, according to the present embodiment, arc length control is achieved by modulating at least the peak current. Arc length control methods include: current modulation control of adjusting at least the peak current, as in the present embodiment; frequency modulation of adjusting the pulse frequency; and pulse-width modulation of adjusting the peak duration. Frequency modulation control involves changing the duration of the base period during which the welding wire is fed in the reverse direction. This means that the average feed speed vary. Pulse arc modulation control alters the duration of the peak period during which forward feeding takes place. This means that the average feed speed vary. That is, control methods other than current modulation control result in dynamic changes in the pulse period, causing the average feed speed to vary accordingly. Thus, current modulation control is preferred for maintaining a constant average feed speed during the feed control of the welding wire in the forward and reverse directions. The present embodiment prevents the average feed speed from varying, thereby ensuring consistent bead appearance and weld penetration shape.

REFERENCE NUMERALS

1: welding wire 2: base material 3: arc 4: welding torch 5: feed rolls DV: drive circuit Dv: drive signal EI: current-error amplifying circuit Ei: amplified-current-error signal EV: voltage-error amplifying circuitEv: amplified-voltage-error signal FC: feed control circuit Fc: feed control signal FR: feed-speed setting circuit Fr: feed-speed setting signal Fw: feed speed Ib: base current Ibr: base-current setting signal IC: current modulating circuit ID: welding-current detection circuit Id: welding-current detection signal Ik: peak falling current Ip: peak current Ipr: peak-current setting signal IR: welding-current setting circuit Ir: welding-current setting signal Iu: peak rising current Iw: welding current MC: power control circuit On: activation signal Pf: pulse frequency PFR: pulse-frequency setting circuit Pfr: pulse-frequency setting signal PS: welding power supplyRC: robot controlling device TA1R: first-preceding-period setting circuit Ta1r: first-preceding-period setting signal TA2R: second-preceding-period setting circuitTa2r: second-preceding-period setting signal TA3R: third-preceding-period setting circuit Ta3r: third-preceding-period setting signal TA4R: fourth-preceding-period setting circuit Ta4r: fourth-preceding-period setting signal Tb: base period TBR: base-period setting circuit Tbr: base-period setting signalTk: peak falling period TKR: peak-falling-period setting circuit Tkr: peak-falling-period setting signal Tm: timer signal Tp: peak period TPR: peak-period setting circuit Tpr: peak-period setting signal Tu: peak rising period TUR: peak-rising-period setting circuit Tur: peak-rising-period setting signal VAV: welding-voltage averaging circuit Vav: average-welding-voltage signal Vb: base voltage VD: welding-voltage detection circuit Vd: welding-voltage detection signal Vp: peak voltage VR: welding-voltage setting circuit Vr: welding-voltage setting signal Vw: welding voltage WL: reactor WM: feed motor Wr: reverse-feeding peak value WRR: reverse-feeding-peak-value setting circuitWrr: reverse-feeding-peak-value setting signal Ws: forward-feeding peak value WSR: forward-feeding-peak-value setting circuit Wsr: forward-feeding-peak-value setting signal

**Claims**

1. A method for controlling pulse arc welding that involves feeding a welding wire and applying a welding current by repeating a pulse cycle including: a peak rising period of applying a peak rising current that increases from a base current to a peak current; a peak period of applying the peak current; a peak falling period of applying a peak falling current that decreases from the peak current to the base current; and a base period of applying the base current, the method comprising changing a feed speed of the welding wire in a manner such that:

the feed speed beings to change from a reverse-feeding peak value toward a forward-feeding peak value at a point earlier by a first preceding period than a start of the peak rising period; the feed speed reaches the forward-feeding peak value at a point earlier than an end of the peak rising period; the feed speed beings to change from the forward-feeding peak value toward the reverse-feeding peak value at a point earlier by a second preceding period than a start of the peak falling period; and the feed speed reaches the reverse-feeding peak value at a point earlier than an end of the peak falling period.

2. The method according to claim 1, wherein the first preceding period and the second preceding period are set to fall within a range from 0.2 ms to 1.0 ms, inclusive.

3. The method according to claim 2, wherein a pulse frequency that is a reciprocal of the pulse cycle is set to fall within a range of $\pm 15\%$ of an average value of the welding current.

4. The method according to any one of claims 1 to 3, further comprising controlling an arc length by modulating at least the peak current.

FIG.1

## FIG.2

## EUROPEAN SEARCH REPORT

**Application Number**

EP 25 18 3445

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S60 180675 A (MITSUBISHI HEAVY IND LTD) 14 September 1985 (1985-09-14) | 1,2 | INV. B23K9/073 |
| Y | * the whole document * | 4 | B23K9/09 |
| A | | 3 | B23K9/12 |
| | ----- | | B23K9/173 |
| Y | EP 4 382 236 A1 (KOBE STEEL LTD [JP]) 12 June 2024 (2024-06-12) | 4 | B23K9/095 |
| A | * paragraphs [0036], [0041], [0042], [0083] - [0086]; claim 1; figures 2, 3, 4, 6, 9 * | 1-3 | |
| | ----- | | |

**TECHNICAL FIELDS SEARCHED (IPC)**

B23K

The present search report has been drawn up for all claims

| Place of search | Date of completion of the search | Examiner |
|---|---|---|
| Munich | 21 October 2025 | Péridis, Marc |

EPO FORM 1503 03.82 (P04C01)

## ANNEX TO THE EUROPEAN SEARCH REPORT
## ON EUROPEAN PATENT APPLICATION NO.

EP 25 18 3445

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2025

| Patent document cited in search report | | Publication date | Patent family member(s) | | Publication date |
|---|---|---|---|---|---|
| JP S60180675 | A | 14-09-1985 | NONE | | |
| EP 4382236 | A1 | 12-06-2024 | CA | 3232406 A1 | 23-03-2023 |
| | | | CN | 117957084 A | 30-04-2024 |
| | | | EP | 4382236 A1 | 12-06-2024 |
| | | | JP | 7582923 B2 | 13-11-2024 |
| | | | JP | 2023044501 A | 30-03-2023 |
| | | | KR | 20240042079 A | 01-04-2024 |
| | | | US | 2024383062 A1 | 21-11-2024 |
| | | | WO | 2023042565 A1 | 23-03-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6123069 B